# EUROPÄISCHE PATENTANMELDUNG

(11) **EP 2 532 540 A1**
(43) Veröffentlichungstag der Anmeldung: **12.12.2012**
(21) Anmeldenummer: 12167338.8
(22) Anmeldetag: 09.05.2012
(51) Int. Cl.: B60G 21/055, B60G 17/016, B60G 17/0165

(54) **Verfahren zur Ansteuerung eines aktiven Wankstabilitätssystems für ein Kraftfahrzeug**

(30) Priorität: 06.06.2011 DE 102011076972
(71) Anmelder: ZF Friedrichshafen AG, 88038 Friedrichshafen (DE)
(72) Erfinder: Maurischat, Christian, 97502 Euerbach (DE)

(57) **Zusammenfassung**

Die Erfindung bezieht sich auf ein Verfahren zur Ansteuerung eines aktiven Wankstabilitätssystems für ein Kraftfahrzeug, das über einen geteilten Stabilisator 12, 12' mit Radträgern 2, 2' oder Dämpfeinrichtungen wirkverbunden ist und das einen Aktuator 14 aufweist, der bei Geradeausfahrt des Kraftfahrzeugs kein oder im Wesentlichen kein Antiwankmoment aktiv generiert. Mittels einer ersten Sensorik werden die auf das Kraftfahrzeug einwirkenden Querbeschleunigungen erfasst und entsprechende Querbeschleunigungssignale einer Steuereinheit 23 zugeleitet. Die erfassten Querbeschleunigungssignale werden mit einem gespeicherten Querbeschleunigungsspektrum verglichen, das durch eine obere Regelschwelle und eine untere Regelschwelle begrenzt ist. Bei Querbeschleunigungen innerhalb des Querbeschleunigungsspektrums wird an dem Aktuator 14 kein Antiwankmoment aktiv generiert und bei die Regelschwellen überschreitenden Querbeschleunigungen an dem Aktuator 14 ein Antiwankmoment aktiv generiert.

## Beschreibung

Die Erfindung bezieht sich auf ein Verfahren zur Ansteuerung eines aktiven Wankstabilisierungssystems für ein Kraftfahrzeug, das über einen geteilten Stabilisator mit Radträgern oder Dämpfeinrichtungen wirkverbunden ist und das einen Aktuator aufweist, der bei Geradeausfahrt des Kraftfahrzeugs kein oder im wesentlichen kein Antiwankmoment aktiv generiert.

Aus dem Stand der Technik ist (DE 10 2005 009 002 A1) ist es bekannt, das Roll- bzw. Wankverhalten von Kraftfahrzeugen mittels aktiver Stabilisatoren zu beeinflussen. Dazu werden beispielsweise die Stabilisatoren an den Achsen in jeweils zwei Teile aufgeteilt und an ihren beiden getrennten Enden über einen Aktuator miteinander verbunden.

Derartige Systeme bieten sowohl bei Kurvenfahrt als auch bei Geradeausfahrt Vorteile. Bei Kurvenfahrt wird ein Drehmoment in den Fahrzeugaufbau eingekoppelt, welches der Wankneigung des Fahrzeugs entgegengerichtet ist. Bei Geradeausfahrt wird kein Moment erzeugt, die Räder einer Achse können jetzt unabhängig voneinander ein- und ausfedern.

Als Haupteingangsgröße derartiger Systeme dient die Querbeschleunigung, da der zu korrigierende Fahrzeugwankwinkel in erster Linie von dieser Größe abhängig ist. Je größer die Querbeschleunigung ist, desto größer wird das von den Aktuatoren gestellte Antiwankmoment.

Nachteilig hat sich erwiesen, dass auf schlechten Straßen auch bei Geradeausfahrt vom Querbeschleunigungssensor Signale geliefert werden. Ohne Gegenmaßnahmen wird also bei Geradeausfahrt auf schlechter Fahrbahnoberfläche unnötigerweise fast ständig ein nicht unerhebliches Stellmoment von den Aktuatoren erzeugt, was den Fahrkomfort deutlich verschlechtert.

Aufgabe der Erfindung ist es daher, ein Verfahren der eingangs genannten Art zu schaffen, das zu einem erhöhten Fahrkomfort bei Geradeausfahrt führt.

Diese Aufgabe wird erfindungsgemäß dadurch gelöst, dass mittels einer ersten Sensorik die auf das Kraftfahrzeug einwirkende Querbeschleunigungen erfasst und entsprechende Querbeschleunigungssignale einer Steuereinheit zugeleitet werden, dass die erfassten Querbeschleunigungssignale mit einem gespeicherten Querbeschleunigungsspektrum verglichen werden, das durch eine obere Regelschwelle und eine untere Regelschwelle begrenzt ist, dass bei Querbeschleunigungen innerhalb des Querbeschleunigungsspektrums an dem Aktuator kein Antiwankmoment aktiv generiert wird und dass bei die Regelschwellen überschreitenden Querbeschleunigungen an dem Aktuator ein Antiwankmoment aktiv generiert wird.

Durch dieses Verfahren wird die Erzeugung unnötiger Stellmomente bei Geradeausfahrt auf schlechter Straße vermieden, was zu einer Reduzierung des Energieverbrauchs des Wankstabilisierungssystems führt.

Erst, wenn die Querbeschleunigungen die Regelschwellen überschreiten, erfolgt eine aktive Generierung eines Antiwankmoments an dem Aktuator des Wankstabilisierungssystems.

Dabei kann die Größe des aktiv generierten Antiwankmoments abhängig von der Größe des die Regelschwellen überschreitenden Anteils der Querbeschleunigungen generiert werden.

Sind die Regelschwellen in Abhängigkeit von der Fahrbahnqualität des von dem Kraftfahrzeug befahrenen Fahrwegs variabel einstellbar, so erfolgt eine Generierung des Antiwankmoments zusätzlich in Abhängigkeit von der Qualität des befahrenen Fahrwegs.

Dabei ist vorzugsweise der Abstand zwischen der oberen Regelschwelle und der unteren Regelschwelle bei guter Fahrbahnqualität kleiner ist als bei schlechter Fahrbahnqualität.

Mittels einer zweiten Sensorik kann die Fahrbahnqualität des befahrenen Fahrwegs erfasst und ein entsprechendes Fahrwegsignal der Steuereinheit zugeleitet werden.

Zur Vereinfachung des Verfahrens können eine Mehrzahl Regelschwellenstufen gespeichert sein, denen jeweils bestimmte Fahrbahnqualitätsstufen zugeordnet sind, wobei dann entsprechend die durch das jeweilige Fahrwegsignal bestimmte Fahrbahnqualtitätsstufe die Regelschwellenstufe bestimmt, innerhalb der kein Antiwankmoment und außerhalb der ein Antiwankmoment generiert wird.

Sind durch die zweite Sensorik die Vertikalgeschwindigkeit und/oder die Vertikalbeschleunigung und/oder der Vertikalhub der Fahrzeugräder und/oder des Fahrzeugaufbaus erfasst und entsprechende Geschwindigkeitssignale und/oder Beschleunigungssignale und/oder Hubsignale der Steuereinheit zuleitbar, so können in Doppelfunktion Sensoren verwendet werden, die auch für andere Regelungen im Kraftfahrzeug Anwendung finden.

Dazu kann die zweite Sensorik an den Dämpfeinrichtungen angeordnet sein, die z.B. auch zur Regelung der Dämpfeinrichtung Verwendung finden.

Ein Ausführungsbeispiel der Erfindung ist in der Zeichnung dargestellt und wird im Folgenden näher beschrieben. Es zeigen
- Fig. 1: eine Einrichtung zum Regeln der Dämpfkraft an einer Achse eines Fahrwerks eines Kraftfahrzeugs
- Fig. 2: ein Diagramm der Querbeschleunigung über die Zeit
- Fig. 3: ein Flussschaltbild eines Verfahrens zur Ansteuerung eines aktiven Wankstabilisierungssystems für ein Kraftfahrzeug.

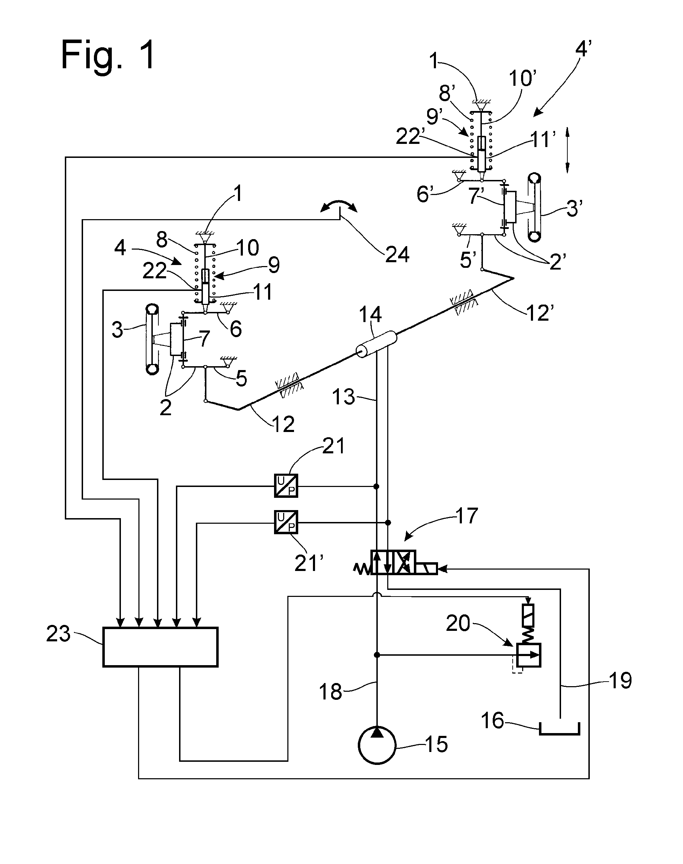

Die in Fig. 1 dargestellte Einrichtung zum Regeln der Dämpfkraft an einer Achse eines Fahrwerks eines Kraftfahrzeugs weist einen Fahrzeugaufbau 1 des Kraftfahrzeugs auf, an dem Radträger 2, 2' der Räder 3, 3' einer Achse durch je eine Radaufhängung 4, 4' vertikal beweglich aufgehängt sind.

Jede Radaufhängung 4, 4' weist einen unteren Dreieckslenker 5, 5' und einen oberen Dreieckslenker 6, 6' auf, die beide am Fahrzeugaufbau 1 um im Wesentlichen parallel zur Fahrtrichtung des Fahrwerks liegende Achsen schwenkbar gelagert sind.

Die beiden Dreieckslenker 5, 5' und 6, 6' sind durch Achsschenkelträger 7, 7' gelenkig miteinander verbunden. An dem Achsschenkträger 7, 7' ist der jeweilige Radträger 2, 2' lenkbar gelagert.

Das Gelenkparallelogramm 5, 5', 6, 6' und 7, 7' ist jeweils durch eine Schraubendruckfeder 8, 8' an dem Fahrzeugaufbau 1 elastisch abgestützt. Die Schraubendruckfeder 8, 8' umschließt mit radialem Abstand einen Stoßdämpfer 9, 9', der einerseits mit dem oberen Dreieckslenker 5, 5' und anderseits mit dem Fahrzeugaufbau 1 gelenkig verbunden ist.

Die Schraubendruckfeder 8, 8' stützt sich einerseits an der Kolbenstange 10, 10' des Stoßdämpfers 9, 9' und andererseits an dem Zylinder 11, 11' des Stoßdämpfers 9, 9' über je einen Federteller ab.

Die beiden unteren Dreieckslenker 5, 5', und 6, 6' der beiden Radaufhängungen 4, 4' sind durch eine Stabilisatoreinrichtung miteinander verbunden, die einen geteilten Stabilisator 12, 12' und einen als hydraulischer Schwenkmotor ausgebildeten Aktuator 14 aufweist.

Zu jeder der beiden Kammern des Aktuators 14 führt eine Leitung 13, 13'.

Über ein entgegen einer Federkraft elektrisch betätigbares 4/2-Wegeventil 17 ist entweder die eine Kammer des Aktuators 14 mit dem Druckauslass einer Pumpe 15 und die andere Kammer mit einem drucklosen Behälter 16 oder umgekehrt verbindbar.

Zwischen der von der Pumpe 15 zur 4/2-Wegeventil 17 führenden Druckleitung 18 und der von dem 4/2-Wegeventil 17 zum Behälter 16 führenden Rücklaufleitung 19 ist ein Druckregler 20 angeordnet.

Weiterhin wird der Druck in jeder Leitung 13, 13' durch einen Drucksensor 21, 21' erfasst.

Bei Geradeausfahrt wird der Aktuator 14 nicht mit einer unter Druck stehenden Hydraulikflüssigkeit beaufschlagt, so dass auch kein oder im Wesentlichen kein Aktivwankmoment am Aktuator 14 generiert wird.

An den Stoßdämpfern 9, 9' sind Wegsensoren 22, 22' einer zweiten Sensorik angeordnet, durch die das Maß des Ein- und Ausfederns der Stoßdämpfer 9, 9' erfasst und entsprechende Hubsignale einer Steuereinheit 23 zuleitbar sind.

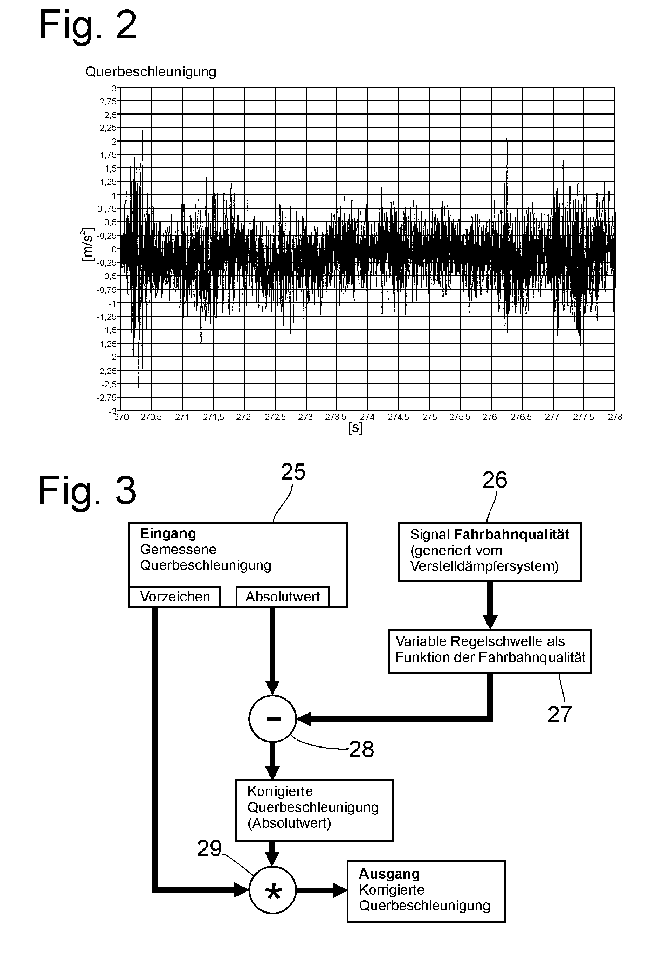

Durch einen Querbeschleunigungssensor 24 werden die auf den Fahrzeugaufbau 1 einwirkenden Querbeschleunigungen erfasst und entsprechende Querbeschleunigungssignale der Steuereinheit 23 zugeleitet. Derartige Querbeschleunigungen über die Zeit sind in dem Diagramm in Fig. 2 dargestellt.

Weiterhin erhält die Steuereinheit 23 Drucksignale der Drucksensoren 21, 21'.

Aufgrund der erhaltenen Signale steuert die Steuereinheit 23 das 4/2-Wegeventil 17 und den Druckregler 20 an, so dass der Aktuator 14 von dem Druck der Pumpe 15 mit einem Antiwankmoment beaufschlagbar ist.

Die Beaufschlagung des Aktuators 14 erfolgt nach dem in Figur 3 dargestellten Verfahren.

Danach wird in einem ersten Schritt 25 von dem Querbeschleunigungssensor 24 die auf den Fahrzeugaufbau 1 einwirkende Querbeschleunigung gemessen und davon der Absolutwert gebildet.

In einem zweiten Schritt wird durch die Wegsensoren 22, 22' das Maß des Ein- und Ausfederns der Stoßdämpfer 9, 9' erfasst und in Abhängigkeit davon in einem dritten Schritt 27 eine untere und obere Regelschwelle der Querbeschleunigung bestimmt, bei deren Überschreiten oder Unterschreiten eine Generierung eines Antiwankmoments erfolgen soll.

Die Regelschwelle ist variabel. Jeder Fahrbahnqualität oder jedem Fahrbahnqualitätsbereich ist eine Regelschwelle oder ein Regelschwellenbereich zugeordnet und in einem Speicher abgelegt.

Die Regelschwelle ist bei guter Fahrbahnqualität kleiner als bei schlechter Fahrbahnqualität.

In einem vierten Schritt 28 wird der aktuelle Wert der variablen Regelschwelle von dem Absolutwert der gemessenen Querbeschleunigung subtrahiert.

Als Ausgangsgröße steht damit der Absolutwert einer korrigierten Querbeschleunigung zur Verfügung.

In einem fünften Schritt 29 wird dieser Absolutwert der korrigierten Querbeschleunigung mit dem Vorzeichen der gemessenen Querbeschleunigung multipliziert und dient als Ansteuergröße des Wankstabilisierungssystems.

### Bezugszeichen

- 1: Fahrzeugaufbau
- 2: Radträger
- 2': Radträger
- 3: Räder
- 3': Räder
- 4: Radaufhängung
- 4': Radaufhängung
- 5: unterer Dreieckslenker
- 5': unterer Dreieckslenker
- 6: oberer Dreieckslenker
- 6': oberer Dreieckslenker
- 7: Achsschenkelträger
- 7': Achsschenkelträger
- 8: Schraubendruckfeder
- 8': Schraubendruckfeder
- 9: Stoßdämpfer
- 9': Stoßdämpfer
- 10: Kolbenstange
- 10': Kolbenstange
- 11: Zylinder
- 11': Zylinder
- 12: Stabilisator
- 12': Stabilisator
- 13: Leitung
- 13': Leitung
- 14: Aktuator
- 15: Pumpe
- 16: Behälter
- 17: 4/2 Wegeventil
- 18: Druckleitung
19 Rücklaufleitung
20 Druckregler
21 Drucksensor
21' Drucksensor
22 Wegsensor
22' Wegsensor
23 Steuereinheit
24 Querbeschleunigungssensor
25 erster Schritt
26 zweiter Schritt
27 dritter Schritt
28 vierter Schritt
29 fünfter Schritt

## Patentansprüche

1. Verfahren zur Ansteuerung eines aktiven Wankstabilisierungssystems für ein Kraftfahrzeug, das über einen geteilten Stabilisator mit Radträgern oder Dämpfeinrichtungen wirkverbunden ist und das einen Aktuator aufweist, der bei Geradeausfahrt des Kraftfahrzeugs kein oder im wesentlichen kein Antiwankmoment aktiv generiert, **dadurch gekennzeichnet, dass** mittels einer ersten Sensorik die auf das Kraftfahrzeug einwirkende Querbeschleunigungen erfasst und entsprechende Querbeschleunigungssignale einer Steuereinheit (23) zugeleitet werden, dass die erfassten Querbeschleunigungssignale mit einem gespeicherten Querbeschleunigungsspektrum verglichen werden, das durch eine obere Regelschwelle und eine untere Regelschwelle begrenzt ist, dass bei Querbeschleunigungen innerhalb des Querbeschleunigungsspektrums an dem Aktuator (14) kein Antiwankmoment aktiv generiert wird und dass bei die Regelschwellen überschreitenden Querbeschleunigungen an dem Aktuator (14) ein Antiwankmoment aktiv generiert wird.

2. Verfahren nach einem der vorhergehenden Ansprüche, **dadurch gekennzeichnet, dass** die Größe des aktiv generierten Antiwankmoments abhängig von der Größe des die Regelschwellen überschreitenden Anteils der Querbeschleunigungen generiert wird.

3. Verfahren nach einem der vorhergehenden Ansprüche, **dadurch gekennzeichnet, dass** die Regelschwellen in Abhängigkeit von der Fahrbahnqualität des von dem Kraftfahrzeug befahrenen Fahrwegs variabel einstellbar sind.

4. Verfahren nach Anspruch 3, **dadurch gekennzeichnet, dass** der Abstand zwischen der oberen Regelschwelle und der unteren Regelschwelle bei guter Fahrbahnqualität kleiner ist als bei schlechter Fahrbahnqualität.

5. Verfahren nach einem der Ansprüche 3 und 4, **dadurch gekennzeichnet, dass** mittels einer zweiten Sensorik die Fahrbahnqualität des befahrenen Fahrwegs erfasst und ein entsprechendes Fahrwegsignal der Steuereinheit (23) zugeleitet wird.

6. Verfahren nach Anspruch 5, **dadurch gekennzeichnet, dass** in der Steuereinheit eine Mehrzahl Regelschwellenstufen gespeichert sind, denen jeweils bestimmte Fahrbahnqualitätsstufen zugeordnet sind.

7. Verfahren nach einem der Ansprüche 5 und 6, **dadurch gekennzeichnet, dass** durch die zweite Sensorik die Vertikalgeschwindigkeit und/oder die Vertikalbeschleunigung und/oder der Vertikalhub der Fahrzeugräder und/oder des Fahrzeugaufbaus erfasst und entsprechende Geschwindigkeitssignale und/oder Beschleunigungssignale und/oder Hubsignale der Steuereinheit (23) zuleitbar sind.

8. Verfahren nach Anspruch 7, **dadurch gekennzeichnet, dass** die zweite Sensorik an den Dämpfeinrichtungen angeordnet ist.
